# NEUE EUROPÄISCHE PATENTSCHRIFT

(11) **EP 2 591 653 B2**
(45) Veröffentlichungstag und Bekanntmachung des Hinweises auf die Entscheidung über den Einspruch: **07.11.2018**
(45) Hinweis auf die Patenterteilung: 07.01.2015
(21) Anmeldenummer: 12007574.2
(22) Anmeldetag: 07.11.2012
(51) Int. Cl.: A01B 73/06, A01D 75/20, A01D 78/10

(54) **Heuwerbungsmaschine**
Haymaking machine
Machine de fenaison

(30) Priorität: 09.11.2011 DE 202011107679 U
(43) Veröffentlichungstag der Anmeldung: 15.05.2013
(73) Patentinhaber: PÖTTINGER Landtechnik GmbH, 4710 Grieskirchen (AT)
(72) Erfinder: Reiter, Stefan, 4663 Laakirchen (AT)
(74) Vertreter: Thoma, Michael

(56) Entgegenhaltungen:
- EP-A1- 2 179 641
- EP-A2- 0 903 067
- WO-A1-99/12407
- Onlineveröffentlichung landtechnikmagazin.de zu Kreiselzettwender KWT2000 der Maschinenfabrik Bernhard Krone GmbH
- Broschüre "Krone KWT 2000 Kreiselzettwender"

## Beschreibung

Die vorliegende Erfindung betrifft eine Heuwerbungsmaschine, vorzugsweise in Form eines Zetters oder Schwaders, mit einem an einen Schlepper anbaubaren Fahrrahmen, der über ein Fahrwerk am Boden abgestützt ist, sowie einer Mehrzahl von Heuwerbungsaggregaten, die an einem Tragrahmen gelagert sind, der relativ zum Fahrrahmen zusammen mit den Heuwerbungsaggregaten von einer Hub-/ Schwenkvorrichtung in eine Vorgewende- und/oder Transportstellung aushebbar ist.

Bei größeren Heuwerbungsmaschinen mit größeren Arbeitsbreiten, die mehrere nebeneinander angeordnete bzw. in verschiedenen Spuren laufende Rechkreisel umfassen, ist es bekannt, die Heuwerbungsaggregate aushebbar an einem durch ein Fahrwerk am Boden abgestützten Fahrrahmen anzuordnen, so dass die Heuwerbungsaggregate am Vorgewende ausgehoben oder zum Zwecke des Transports noch weiter ausgehoben und ggf. zusammengeklappt werden können. Hierzu ist der Tragrahmen, der die Heuwerbungsaggregate trägt, üblicherweise um eine liegende Querachse schwenkbar an dem Fahrrahmen angelenkt, so dass der Tragrahmen zusammen mit den daran angeordneten Heuwerbungsaggregaten in Form von Rechkreiseln nach vorne/oben verschwenkt bzw. ausgehoben werden kann, wobei der Tragrahmen ggf. abklappbare Seitenteile aufweisen kann, die in der Transportstellung nach vorne geschwenkt werden. Derartige Heuwerbungsmaschinen in Form von Zettern sind beispielsweise aus den Druckschriften EP 18 59 670 A1 oder WO 2010/074558 A1 bekannt.

Bei solchen Heuwerbungsmaschinen stehen dann die Rechkreisel in der Transportstellung mit den Rechzinken nach außen, was eine entsprechende Verletzungs- und Kollisionsgefahr mit sich bringt. Die nach vorne an den Fahrrahmen angeklappten Rechkreisel sind in der genannten Transportstellung mit ihren Rechkreiselachsen verkippt, so dass die genannten Rechkreiselachsen etwa liegend quer zur Fahrtrichtung ausgerichtet sind und die Rechzinken in gefährlicher Weise direkt offen zur Seite abstehen. Eine solche Verkippung der Rechkreisel in der Transportstellung ist an sich nötig, um in der gewünschten Weise eine ausreichend schmale Straßentransportbreite zu erreichen. Dies kann beispielsweise dadurch erreicht werden, dass der Tragrahmen zunächst um eine liegende Querachse insgesamt nach oben geschwenkt wird, so dass die Rechkreisel zunächst mit ihren Kreiselachsen liegend in Fahrtrichtung weisen, woraufhin dann die Seitenteile des Tragrahmens nach vorne geklappt werden können, um die gewünschte Transportstellung zu erreichen, in der sich die Heuwerbungsaggregate entlang des Fahrrahmens erstrecken.

Aus der Schrift EP 21 79 641 A1 ist es bekannt, vor den hochgeklappten Zetterkreiseln einer entsprechenden Heuwerbungsmaschine eine Schutzbarriere vorzusehen, die in Form eines von einer Speicherspule abziehbaren Bandes ausgebildet ist.

Der vorliegenden Erfindung liegt die Aufgabe zugrunde, eine verbesserte Heuwerbungsmaschine der eingangs genannten Art zu schaffen, die Nachteile des Standes der Technik vermeidet und Letzteren in vorteilhafter Weise weiterbildet. Insbesondere soll die Transportsicherheit der Maschine verbessert werden, ohne hierfür eine komplizierte Kinematik zum Verbringen der Heuwerbungsaggregate in die Transportstellung vorsehen zu müssen.

Diese Aufgabe wird durch eine Heuwerbungsmaschine gemäß Anspruch 1 gelöst. Bevorzugte Ausgestaltungen der Erfindung sind Gegenstand der abhängigen Ansprüche.

Es wird also vorgeschlagen, die Heuwerbungsaggregate in der Transportstellung durch ein vorgeblendetes Schutzelement abzusichern und das Schutzelement wegbewegbar zu lagern, um die Bewegung der Heuwerbungsaggregate in die und aus der Transportstellung nicht zu behindern und die herkömmliche Kinematik zum Verbringen in die Transportstellung beibehalten zu können. Durch die Wegbewegbarkeit des Kollisionsschutzes kann dieser zudem in der optimalen Position vor den Heuwerbungsaggregaten ohne Rücksicht auf mögliche Kollisionen hiermit angeordnet werden. Erfindungsgemäß ist an dem Fahrrahmen eine Schutzbarriere beweglich gelagert, die zwischen einer Schutzstellung, in der die Schutzbarriere quer zur Fahrtrichtung betrachtet vor den in Transportstellung befindlichen Heuwerbungsaggregaten angeordnet ist, und einer Inaktivstellung, in der die in Transportstellung befindlichen Heuwerbungsaggregate quer zur Fahrtrichtung frei liegen, bewegbar ist. Die Schutzbarriere erstreckt sich in ihrer Schutzstellung derart vor den Arbeitswerkzeugen der Heuwerbungsaggregate, dass in Fahrtrichtung betrachtet keine Personen von der Seite her in die Arbeitswerkzeuge laufen können und die Arbeitswerkzeuge auch nicht an anderen Hindernissen wie Bäumen oder Gebäudekanten hängenbleiben können, da die Schutzbarriere dies nach Art einer Leitplanke oder eines Stoßfängers verhindert. In der Inaktivstellung hingegen liegen die in Transportstellung befindlichen Heuwerbungsaggregate quer zur Fahrtrichtung frei, so dass die Heuwerbungsaggregate aus der Transportstellung quer zur Fahrtrichtung nach außen weggeklappt werden können. Die Schutzbarriere befindet sich außerhalb der Schwenk- oder Bewegungsbahn der Heuwerbungsaggregate aus der Transportstellung in die Vorgewende- oder Arbeitsstellung und umgekehrt. Auch wenn die Heuwerbungsaggregate nicht durch Nach-außen-Klappen um aufrechte Schwenkachsen aus der Transportstellung bewegt werden, sondern beispielsweise durch ein Anheben bzw. Schwenken nach oben, entsteht kein Kollisionsproblem mit der genannten Schutzbarriere, da sich die Arbeitswerkzeuge der Heuwerbungsaggregate nicht in der Schutzbarriere verheddern können, wenn diese in der Inaktivstellung ist.

Erfindungsgemäß ist die Schutzbarriere dabei an dem Fahrrahmen anhebbar und absenkbar gelagert, derart, dass die Schutzbarriere unter die in Transportstellung befindlichen Heuwerbungsaggregate absenkbar und in einen von den Heuwerbungsaggregaten in Transportstellung eingenommenen Höhenbereich anhebbar ist. Um die Heuwerbungsaggregate aus der Transportstellung quer nach außen wegbewegen zu können, um in die Vorgewende- bzw. Arbeitsstellung zu gelangen, kann die Schutzbarriere so weit nach unten geschwenkt werden, dass die Heuwerbungsaggregate quer zur Fahrtrichtung nach außen sozusagen freie Bahn haben. Umgekehrt kann die Schutzbarriere aus der genannten, abgesenkten Transportstellung nach oben in die Schutzstellung angehoben werden, so dass sich die Schutzbarriere im von den Arbeitsaggregaten in der Transportstellung eingenommenen Höhenbereich erstreckt und die Arbeitsaggregate quer zur Fahrtrichtung abdeckt. Insbesondere kann die Schutzbarriere in der Schutzstellung etwa im Bereich zwischen Hüft- und Schulter- bzw. Brusthöhe eines erwachsenen Menschen angeordnet sein und sich vor den Arbeitsaggregaten erstrecken.

Die Beweglichkeit der Schutzbarriere zwischen der genannten Inaktivstellung und der Schutzstellung kann grundsätzlich in verschiedener Art und Weise erzielt werden, beispielsweise durch mehrachsiges Verschwenken über eine entsprechende Lenkeranordnung. Um jedoch eine einfache Kinematik bei gleichzeitig hoher Stabilität der Schutzbarriere zu erzielen, ist in Weiterbildung der Erfindung vorgesehen, dass sich die Schutzbarriere um eine liegende, etwa in Fahrtrichtung weisende Schwenkachse schwenkbar am Fahrrahmen gelagert ist, so dass die Schutzbarriere um die besagte liegende Schwenkachse auf einer Kreisbahn zwischen Inaktivstellung und Schutzstellung auf und ab schwenkbar ist. In vorteilhafter Weiterbildung der Erfindung ist die genannte Schwenkachse hierbei quer von einer Längsmittelebene der Heuwerbungsmaschine beabstandet und im Wesentlichen unter den in Transportstellung befindlichen Heuwerbungsaggregaten angeordnet, insbesondere etwa unter Kreiseltragarmen von Rechkreiseln, deren Kreiselachse sich in der genannten Transportstellung liegend quer zur Fahrtrichtung erstrecken können.

Um ein händisches Tätigwerden oder gar ein Absteigen des Maschinenführers zu vermeiden, sind gemäss der Erfindung Stellmittel zum automatischen Verstellen der Schutzbarriere vorgesehen, wobei die genannten Stellmittel in Abhängigkeit der Stellung bzw. Bewegung der Heuwerbungsaggregate bzw. des die Heuwerbungsaggregate tragenden Tragrahmens gesteuert sind, so dass die Schutzbarriere automatisch in die Schutzstellung bewegt wird, wenn die Heuwerbungsaggregate ihre Transportstellung erreicht haben bzw. sich darauf zu bewegen. Insbesondere können die genannten Stellmittel derart gesteuert sein, dass die Schutzbarriere dann in ihre Schutzstellung gefahren wird, wenn die Heuwerbungsaggregate den letzten Endabschnitt ihrer Bewegungsbahn in die Transportstellung durchlaufen bzw. die Transportstellung erreichen. Insbesondere können die Stellmittel derart gesteuert sein, dass die Schutzbarriere erst dann in die Schutzstellung verfährt, wenn die Heuwerbungsaggregate bereits mehr oder minder bzw. im Wesentlichen vollends nach vorne an den Fahrrahmen angeklappt bzw. dort hinbewegt sind und nur noch ein Stück weit abgesenkt werden müssen, um die Transportstellung abschließend zu erreichen.

Vorteilhafterweise sind die Steuermittel für die genannte Verstellung der Schutzbarriere derart ausgebildet, dass bei umgekehrter Bewegung aus der Transportstellung heraus die Schutzbarriere automatisch in ihre Inaktivstellung verfahren wird, wobei die Steuermittel insbesondere derart ausgebildet sein können, dass die Schutzbarriere gleich im Anfangsbereich der Stellbewegung der Heuwerbungsaggregate in die Inaktivstellung gefahren wird, insbesondere unmittelbar dann, wenn die Heuwerbungsaggregate die Transportstellung verlassen.

Die Stellmittel zum automatischen Verstellen der Schutzbarriere können hierbei grundsätzlich verschieden ausgebildet sein. Erfindungsgemäss ist eine sensorische Erfassung der Bewegung bzw. der Stellung der Heuwerbungsaggregate vorgesehen und die Stellmittel weisen einen fremdenergiebetätigbaren Stellaktor auf, der entsprechend der sensorischen Erfassung der Stellung bzw. Bewegung der Heuwerbungsaggregate betätigt wird.

Nach einem illustrativen Beispiel umfassen die genannten Stellmittel einen mechanischen Betätiger, der mit der Schutzbarriere gekoppelt ist und durch ein Heuwerbungsaggregatsteil und/oder ein Tragrahmenteil in Eingriff bringbar ist, wenn die Heuwerbungsaggregate auf ihre Transportstellung zu bewegt werden bzw. in diese gelangen. Der genannte Betätiger kann hierbei nach Art eines Anschlags wirken, gegen den das Heuwerbungsaggregatsteil bzw. Tragrahmenteil fährt, um den Betätiger dann zu verschieben und dann hierdurch die Bewegung der Schutzbarriere zu erzeugen. In diesem Fall bilden sozusagen die Heuwerbungsaggregate selbst den Aktor, um die Schutzbarriere in die Schutzstellung zu verbringen.

Insbesondere kann der genannte mechanische Betätiger einen Schwenkhebel umfassen, der durch eine Vertikalbewegung und/oder eine Querbewegung der Heuwerbungsaggregate verschwenkbar ist und die Bewegung der Schutzbarriere erzeugt. Navh vorteilhafter Weiterbildung dieses Beispiels kann der genannte Schwenkhebel um eine liegende, etwa in Fahrtrichtung weisende Achse schwenkbar gelagert sein, wodurch sich insbesondere bei ebenfalls schwenkbarer Lagerung der Schutzbarriere eine einfache Antriebskinematik ergibt.

In Weiterbildung dieses Beispiels kann der genannte mechanische Betätiger zusammen mit der Schutzbarriere eine Wippe bilden, die ein Niederdrücken des Betätigers in ein Anheben der Schutzbarriere umsetzt und/oder umgekehrt ein Niederdrücken der Schutzbarriere in ein Anheben des Betätigers umsetzt.

Die Rückstellung der Schutzbarriere in eine Ausgangsstellung, insbesondere in eine abgesenkte Inaktivstellung, kann hierbei in verschiedener Art und Weise erzeugt werden, beispielsweise durch eine entsprechende Vorspannvorrichtung beispielsweise in Form einer Federeinrichtung. Alternativ oder zusätzlich kann das Verbringen der Schutzbarriere in die Ausgangsstellung auch durch Schwerkraft erzeugt werden, was bei vorgenannten schwenkbarer Anlenkung bzw. Wippenausbildung durch geeignete Wahl der Schwenkachse für die Schutzbarriere erzielt werden kann, so dass das Gewicht der Schutzbarriere einen ausreichenden Hebelarm besitzt, um die Schutzbarriere in die Inaktivstellung abzusenken.

In Weiterbildung dieses Beispiels kann der genannte mechanische Betätiger im Bereich einer Abstützfläche vorgesehen sein, auf die die Heuwerbungsaggregate in der Transportstellung abgesetzt werden können. Eine solche Abstützfläche kann am Tragrahmen vorgesehen bzw. hiermit verbunden sein, um die Heuwerbungsaggregate in der Transportstellung abzustützen und beispielsweise gegen Vibrationen und Stöße von Bodenwellen abzufangen. Vorteilhafterweise kann die genannte Abstützfläche als Absetzmulde ausgebildet sein, um einen in der Transportstellung unten liegenden Abschnitt der Heuwerbungsaggregate abzufangen und in vertikaler Richtung und ggf. auch quer hierzu abzufangen. Insbesondere kann die genannte Absetzmulde einem Schutzbügel der Heuwerbungsaggregate zugeordnet sein, der sich üblicherweise in Arbeitsstellung der Arbeitsaggregate vor den genannten Arbeitsaggregaten erstreckt.

Bei Zuordnung des mechanischen Betätigers im Bereich der genannten Abstützmulde kann das Anfahren der Abstützfläche gleichzeitig zur Betätigung des Betätigers genutzt werden. Der genannte mechanische Betätiger kann insbesondere dazu bestimmt sein, mit dem genannten Schutzbügel eines der Heuwerbungsaggregate in Eingriff zu gelangen, wenn die Heuwerbungsaggregate in die Transportstellung gelangen. Alternativ oder zusätzlich könnte der mechanische Betätiger jedoch auch einem Tragrahmenteil zugeordnet sein, so dass der die Heuwerbungsaggregate tragende Tragrahmen die Schutzbarriere betätigt und in die Schutzstellung bewegt, wenn die Arbeitsaggregate in die Transportstellung gefahren werden.

Um die Heuwerbungsaggregate aus der Arbeitsstellung, in der sich die Heuwerbungsaggregate vorteilhafterweise quer zur Fahrtrichtung versetzt insbesondere nebeneinander angeordnet erstrecken können, in die genannte Transportstellung entlang des Fahrrahmens verbringen zu können, kann der Tragrahmen in vorteilhafter Weiterbildung der Erfindung um zumindest eine liegende Querachse schwenkbar an dem Fahrrahmen angelenkt sein und abklappbare Seitenteile umfassen, die an einem Mitteilteil des Tragrahmens, der in der genannten Weise um die liegende Querachse schwenkbar ist, angelenkt sind derart, dass die genannten Seitenteile in der abgesenkten Arbeitsstellung um liegende, in Fahrtrichtung weisende Achsen scharnieren und in der ausgehobenen Transportstellung zusammen mit den daran gelagerten Heuwerbungsaggregaten nach vorne an den Fahrrahmen anklappbar sind. Bei einer solchen zweiachsigen bzw. mehrgelenkigen Aufhängung des Tragrahmens können die Heuwerbungsaggregate insbesondere dadurch in die Transportstellung verbracht werden, dass zunächst der Tragrahmen insgesamt um die genannte liegende Querachse nach oben verschwenkt wird, bis sich die genannte Scharnierachse der Seitenteile nicht mehr liegend, sondern aufrecht erstreckt, so dass die Seitenteile dann um die aufrecht stehenden Scharnierachsen nach vorne an den Fahrrahmen angeklappt werden können.

Um bei einer solchen Kinematik die Schutzbarriere mechanisch betätigen und in die Schutzstellung verbringen zu können, kann der genannte mechanische Betätiger derart angeordnet und ausgebildet sein, dass die Heuwerbungsaggregate und/oder der Tragrahmen beim Nach-vorne-Klappen an den Fahrrahmen gegen den Betätiger drücken. Alternativ oder zusätzlich können die Arbeitsaggregate in der nach vorne angeklappten Stellung noch ein Stück weit abgesenkt werden, um den mechanischen Betätiger nach unten zu drücken und hierdurch die Schutzbarriere nach oben zu fahren.

Die Anlenkung des Tragrahmens muss hierbei aber nicht in der genannten Weise um nur eine liegende Querachse schwenkbar ausgebildet sein. Beispielsweise um ein Einstechen der Arbeitswerkzeuge beim anfänglichen Ausheben in die Vorgewendestellung zu verhindern, können auch mehrachsige Anlenkungen bzw. mehrteilige Ausbildungen des Tragrahmens bzw. des genannten Mittelteils vorgesehen sein. Beispielsweise kann der genannte Tragrahmen nicht direkt am Fahrrahmen angelenkt sein, wobei vorteilhafterweise zwischen Fahrrahmen und Tragrahmen eine mehrfache Gelenkigkeit vorgesehen sein kann. Beispielsweise kann zwischen dem Fahrrahmen und dem die Bearbeitungsaggregate tragenden Tragrahmen ein Zwischenrahmen vorgesehen sein, der einerseits um eine erste liegende Querachse schwenkbar am Fahrrahmen angelenkt ist und andererseits um eine zweite liegende Querachse schwenkbar mit dem Tragrahmen verbunden ist. Die Hubschwenkvorrichtung zum Ausheben des Tragrahmens kann dabei derart ausgebildet sein, dass der Tragrahmen und der Zwischenrahmen einerseits relativ zueinander schwenkbar sind, um die Winkellage der Bearbeitungsaggregate relativ zum Boden zu verändern, und andererseits gemeinsam relativ zum Fahrrahmen schwenkbar sind, um in die Vorgewende- bzw. Transportstellung verbracht zu werden.

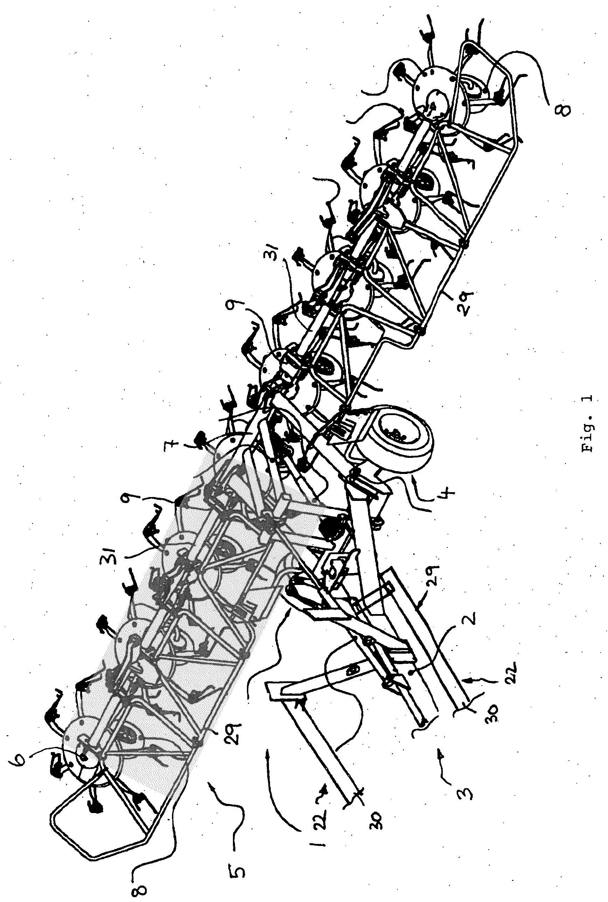

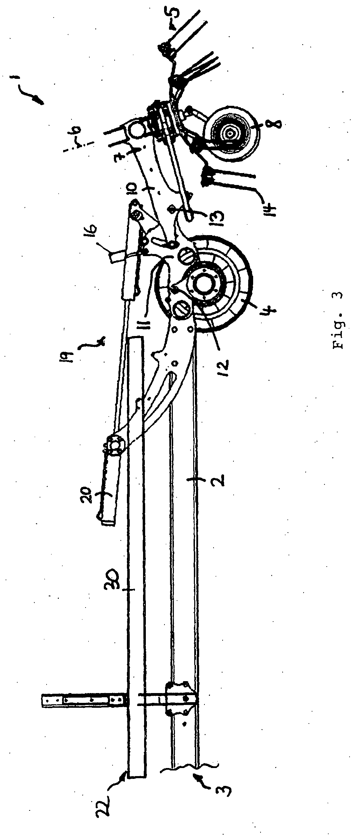

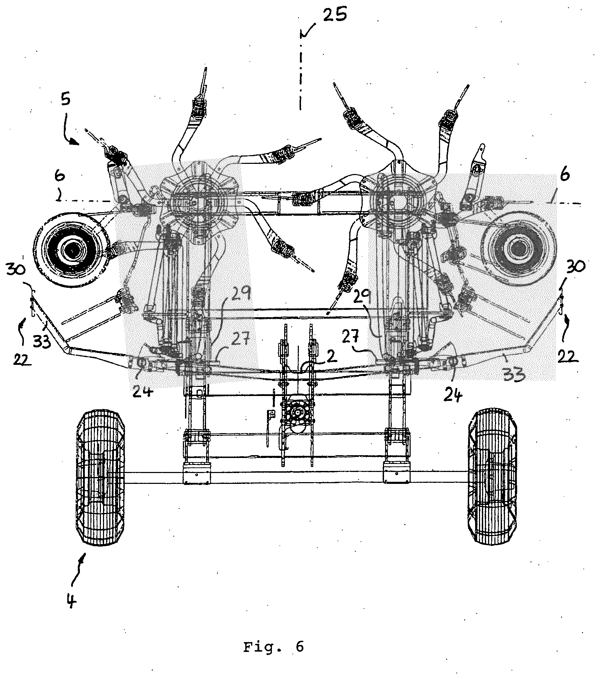

Die vorliegende Erfindung wird nachfolgend anhand eines bevorzugten Ausführungsbeispiels und zugehöriger Zeichnungen näher erläutert. In den Zeichnungen zeigen:
Fig. 1:
   eine perspektivische Ansicht einer Heuwerbungsmaschine in Form eines Zetters nach einer vorteilhaften Ausführung der Erfindung, wobei die Heuwerbungsaggregate in Form von Rechkreiseln in ihrer abgesenkten Arbeitsstellung gezeigt sind,
Fig. 2:
   eine schematische Seitenansicht der Heuwerbungsmaschine aus Fig. 1, wobei die Heuwerbungsaggregate in ihrer ausgehobenen Transportstellung und die Schutzbarriere in der Schutzstellung vor den ausgehobenen Heuwerbungsaggregaten gezeigt ist,
Fig. 3:
   eine Seitenansicht der Heuwerbungsmaschine aus den vorhergehenden Figuren, wobei die Heuwerbungsaggregate in der abgesenkten Arbeitsstellung gezeigt sind,
Fig. 4:
   eine Seitenansicht der Heuwerbungsmaschine ähnlich Fig. 3, wobei die Arbeitsaggregate in der Vorgewendestellung gezeigt sind,
Fig. 5 :
   eine perspektivische, ausschnittsweise Darstellung der rechts und links vorgesehenen Schutzbarrieren zur Absicherung der Heuwerbungsaggregate in der Transportstellung,
Fig. 6:
   eine Heckansicht der Heuwerbungsmaschine mit in die Transportstellung gebrachten Heuwerbungsaggregaten, wobei die Schutzbarriere in ihre Schutzstellung gefahren ist, und
Fig. 7:
   eine Heckansicht der Heuwerbungsmaschine ähnlich Fig. 6, wobei die Arbeitsaggregate in der Arbeitsstellung und die Schutzbarriere 22 in der abgesenkten Inaktivstellung gezeigt sind.

Die Heuwerbungsmaschine 1 umfasst vorteilhafterweise einen länglichen Fahrrahmen 2, der mit seinem vorderen Ende durch eine an sich übliche Anbauvorrichtung 3 an einem nicht gezeigten Schlepper angebaut werden kann und durch ein Fahrwerk 4, das vorteilhafterweise an einem heckseitigen Abschnitt des Fahrrahmens 2 angeordnet sein kann, am Boden abgestützt ist. Die genannte Anbauvorrichtung 3 kann hierbei verschieden ausgebildet sein und vorteilhafterweise eine Verschwenkung des Fahrrahmens 2 gegenüber dem Schlepper um eine aufrechte Achse zulassen, so dass der Fahrrahmen 2 nach Art eines Trailers dem Schlepper hinterherlaufen kann.

An dem genannten Fahrrahmen 2 sind in noch näher zu erläuternder Weise als Heuwerbungsaggregate eine Mehrzahl von Rechkreiseln 5 angelenkt, die in der Arbeitsstellung um näherungsweise aufrechte Kreiselachsen 6 rotatorisch antreibbar sind und umlaufende Rechzinken umfassen, mittels derer auf dem Boden liegendes Erntegut wie beispielsweise Gras oder Heu zusammengerecht, geschwadet, gezettet oder in anderer Weise bearbeitet werden kann. Der Antrieb zum rotatorischen Antreiben der Rechkreisel 5 kann verschieden ausgebildet sein, beispielsweise eine Gelenkwelle, ggf. mit Verteilergetriebe umfassen, um die Rechkreisel 5 von einer Zapfwelle des Schleppers her anzutreiben.

Die genannten Rechkreisel 5 sind hierbei an einem Tragrahmen 7 aufgehängt, der gegenüber dem Fahrrahmen 2 aushebbar und verschwenkbar ist. Die Rechkreisel 5 sind hierbei vorteilhafterweise durch Stützräder 8 bzw. Tasträder am Boden abgestützt, wobei in der gezeichneten Ausführung unter jedem Rechkreisel 5 ein solches Stützrad 8 vorgesehen ist.

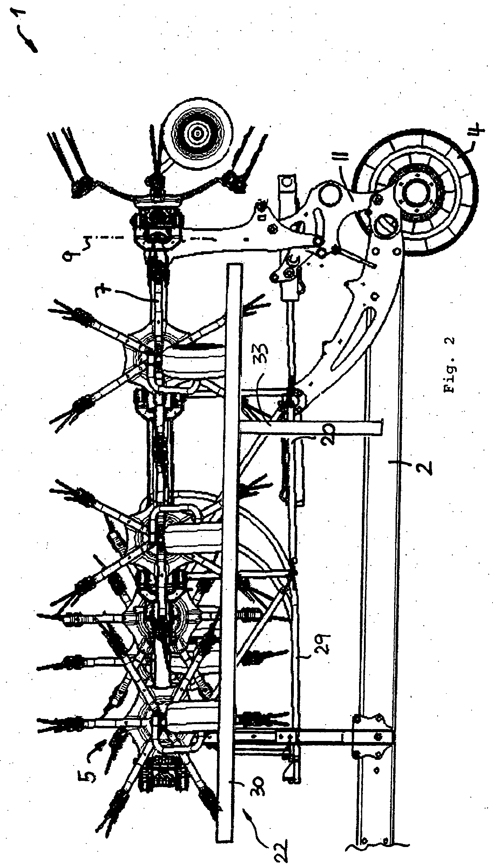

Die in Arbeitsstellung seitlich auskragenden Seitenteile des Tragrahmens 7 sind vorteilhafterweise in mehrere Tragrahmenteile unterteilt, die relativ zueinander um Scharnierachsen scharnieren können, die in der Arbeitsstellung liegend in Fahrtrichtung weisen, um eine entsprechende Bodenanpassung über die Breite des Geräts zuzulassen. Durch die in Fig. 2 gezeigte Scharnierachse 9 kann hierbei in der ausgehobenen Stellung der gesamte Seitenteil des Tragrahmens 7 mit den daran angelenkten Rechkreiseln 5 nach vorne verschwenkt werden, so dass sich die Seitenteile des Tragrahmens mit den daran angelenkten Rechkreiseln 5 näherungsweise parallel zum Fahrrahmen 2 entlang dem Fahrrahmen nach vorne erstrecken, vgl. Fig. 2, um die Arbeitsbreite entsprechend zu verkleinern.

Ein zentraler Mittelteil des genannten Tragrahmens 7 umfasst hierbei einen die Rechkreisel 5 übergreifenden und in der Arbeitsstellung nach vorne zum Fahrrahmen 2 hin weisenden Anlenkteil 10, der der Anlenkung des Tragrahmens 7 am Fahrrahmen 2 dient.

Genauer gesagt ist der genannte Anlenkteil 10 des Tragrahmens 7 an einem Zwischenrahmen 11 angelenkt, der sich zwischen dem Fahrrahmen 2 und dem Tragrahmen 7 erstreckt. Wie ein Vergleich der Figuren 1 bis 3 zeigt, ist der genannte Zwischenrahmen 11 einerseits um eine erste liegende Querachse 12 schwenkbar an dem Fahrrahmen 2 angelenkt, wobei sich die genannte erste Querachse 12 im Bereich des Fahrwerks 4, vorzugsweise unmittelbar über dem Fahrwerk 4, erstreckt, so dass die beim Ausheben in den Fahrrahmen 2 eingeleitete Gewichtskraft der Rechkreisel 5 unmittelbar über das Fahrwerk 4 abgeleitet werden kann.

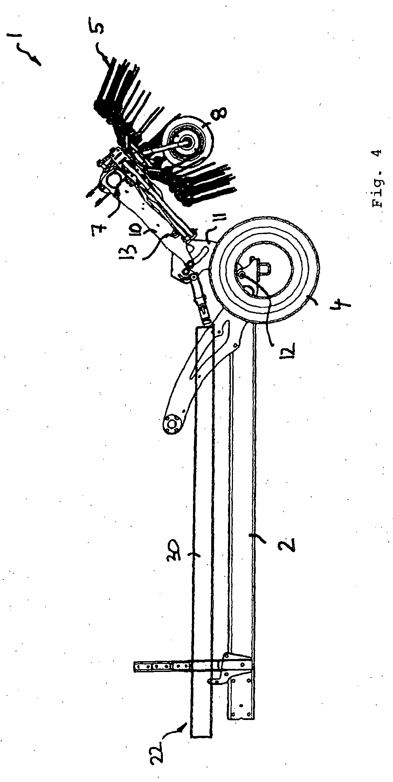

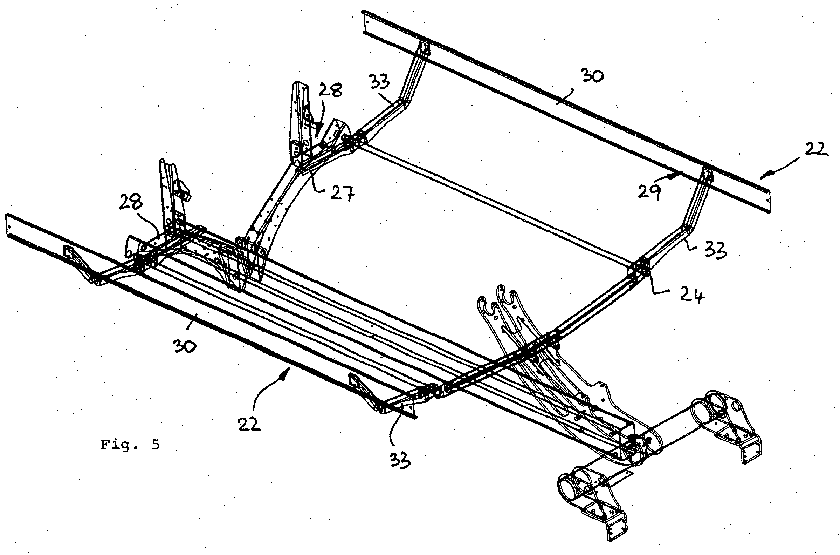

Andererseits ist der genannte Zwischenrahmen 11 um eine zweite liegende Querachse 13 gelenkig bzw. knickbar mit dem Anlenkteil 10 des Tragrahmens 7 verbunden, so dass der Zwischenrahmen 11 und der Tragrahmen 7 zueinander abgeknickt werden können, wie dies ein Vergleich der Figuren 4 und 5 zeigt.

Weiterhin umfasst die Hub-/Schwenkvorrichtung 19 zum Ausheben des Tragrahmens 7 und der daran angelenkten Rechkreisel 5 in eine Vorgewende- bzw. Transportstellung einen Stellaktor 20 zwischen dem Fahrrahmen 2 und dem Zwischenrahmen 11, um den Zwischenrahmen 11 gegenüber dem Fahrrahmen 2 verschwenken und ausheben zu können. Der genannte Stellaktor 20 kann beispielsweise ein Hydraulikzylinder sein, der einerseits am Fahrrahmen 2 bzw. einer damit verbundenen Konsole und andererseits an dem Zwischenrahmen 11 bzw. einer daran befestigten Konsole angelenkt ist, und zwar jeweils von der ersten Querachse 12 beabstandet, um einen entsprechenden Hebel zu haben.

Um die Heuwerbungsaggregate 5 aus der in den Figuren 1 und 3 gezeigten Arbeitsstellung auszuheben, wird zunächst der genannte Stellaktor 20 betätigt, um den gesamten Tragrahmen 7 um die genannten liegenden Querachsen 12 und 13 nach oben zu schwenken, wobei - je nach Arbeitssituation - in der in Fig. 3 gezeigten Vorgewendestellung angehalten werden kann. Sollen indes die Heuwerbungsaggregate 5 in die Transportstellung gemäß Fig. 2 verbracht werden, wird über die genannte Hubschwenkvorrichtung 19 der Tragrahmen 7 über die in Fig. 4 gezeigte Vorgewendestellung hinaus nach oben geschwenkt, bis die zuvor genannten Scharnierachsen 9 näherungsweise aufrecht stehen.

Sodann werden die Seitenteile 31 des Tragrahmens 7, vorzugsweise mittels zwischen den Seitenteilen 31 und dem Mittelteil des Tragrahmens 7 vorgesehener Stellaktoren beispielsweise in Form von Druckmittelzylindern, um die genannten Scharnierachsen 9, die nun aufrecht stehen, nach vorne geklappt, bis die Heuwerbungsaggregate 5 näherungsweise an den Fahrrahmen 2 angeklappt sind bzw. sich entlang dessen hintereinander erstrecken. In dieser in Fig. 2 gezeigten Transportstellung erstrecken sich die Rechkreiselachsen im Wesentlichen liegend quer zur Fahrtrichtung, wobei die Arbeitswerkzeuge bzw. Rechzinken jeweils nach außen weisen, wie dies Fig. 2 zeigt.

Um hier eine Verletzungsgefahr zu vermeiden, sind rechts und links vom Fahrrahmen 2 zwei Schutzbarrieren 22 vorgesehen, die jeweils im Wesentlichen einen U-förmigen Schutzbügel 29 aufweisen, wobei jeder der genannten Schutzbügel 29 einen Barriereschenkel 30 aufweist, der sich näherungsweise parallel zum Fahrrahmen 2 erstreckt und ausreichend lang ausgebildet ist, um die parallel am Fahrrahmen 2 angeklappten Heuwerbungsaggregate seitlich abzudecken. Der genannte Barriereschenkel 30 kann ein Balken, ein Rohr oder auch ein Blech in Form eines Schilds oder dergleichen sein, wobei vorteilhafterweise eine längsträgerartige Ausbildung vorgesehen sein kann, wie diese die Figuren zeigen.

Der Barriereschenkel 30 ist über Lagerschenkel 33, die sich quer zur Fahrtrichtung erstrecken können, am Fahrrahmen 2 und/oder damit verbundenen Haltekonsolen befestigt wobei eine schwenkbare Lagerung um liegende Schwenkachsen 24 vorgesehen sein kann, wie dies die Fig. 5 verdeutlicht. Vorteilhafterweise erstreckt sich die genannte Schwenkachse 24 für den Schutzbügel 29 von der Längsmittelebene 25 der Heuwerbungsmaschine 1 quer beabstandet im Wesentlichen fahrtrichtungsparallel, so dass die quer auskragenden Schutzbügel 29 auf und ab geschwenkt werden können. Die genannte Schwenkachse 24 kann hierbei im Wesentlichen unter den Heuwerbungsaggregaten 5 angeordnet sein, wenn diese in Transportstellung sind, wobei sich die genannte Schwenkachse 24 insbesondere etwa unter den Rechkreiseltragarmen der Rechkreisel erstrecken kann.

Um die genannten Schutzbügel 29 auf und ab schwenken zu können, sind mechanische Betätiger 27 an den Lagerschenkeln 33 befestigt und mit diesen zu einer Wippe verbunden, die um die jeweilige Schwenkachse 24 verschwenken kann.

Wie Fig. 5 zeigt, können die nicht beanspruchten genannten mechanischen Betätiger 27 im Bereich von Abstützflächen 28 vorgesehen sein, auf denen die Heuwerbungsaggregate 5 in der Transportstellung abgesetzt werden können. Die genannten Abstützflächen 28 können an einer Stützkonsole vorgesehen sein, die vom Fahrrahmen 2 quer schräg nach oben auskragen können und an ihren Enden eine Aufnahmemulde bilden, in die die Heuwerbungsaggregate vorzugsweise mit ihren Schutzbügeln 34 abgesetzt werden können.

Die Anordnung und Ausbildung der nicht beanspruchten genannten mechanischen Betätiger 27 ist dabei derart getroffen, dass in der abgesenkten Ausgangsstellung der Schutzbarriere 22 die Betätiger 27 über die Abstützfläche 28 nach oben vorspringen, so dass beim Absetzen der Heuwerbungsaggregate 5 der mechanische Betätiger 27 mit den Heuwerbungsaggregaten 5 in Eingriff gelangt und von diesen niedergedrückt werden kann. Durch die genannte wippenartige Ausbildung führt das Niederdrücken der mechanischen Betätiger 27 zu einem Nach-oben-Fahren der Schutzbarriere 22 durch Verschwenken um die genannte Schwenkachse 24.

Vorteilhafterweise kann das vollständige Anfahren der Transportstellung nochmals ein Absenken der Seitenteile 31 des Tragrahmens 7 umfassen. Sind die genannten Seitenteile 31 vollständig nach vorne eingeklappt, kann über die Hubschwenkvorrichtung 19 der Tragrahmen 7 nochmals ein Stück weit nach vorne gekippt werden, wodurch die nach vorne auskragenden Seitenteile 31 des Tragrahmens 7 ein Stück weit abgesenkt werden und gegen die genannten Betätiger 27 drücken bzw. diese niederdrücken, bis die Abstützflächen 28 vollständig erreicht sind.

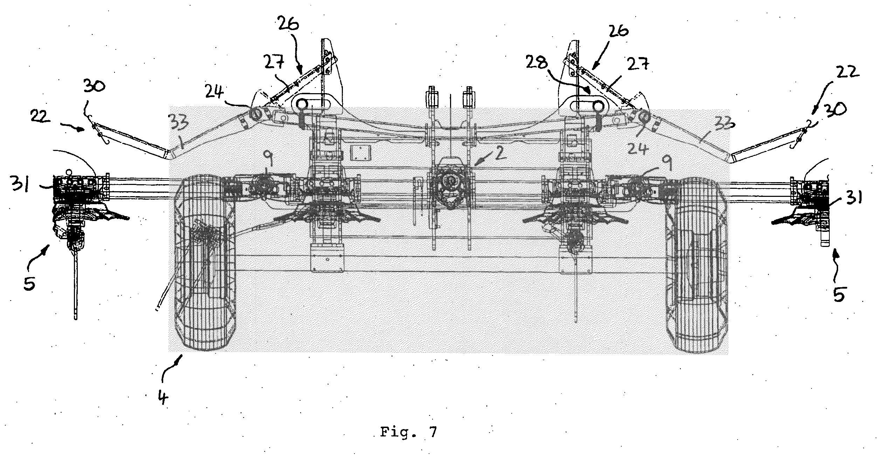

Wie ein Vergleich der Figuren 6 und 7 zeigt, kann die Anordnung derart getroffen sein, dass sich die Schutzbarrieren 22 mit ihren Lagerschenkeln 33 in der abgesenkten Ausgangsstellung etwa liegend von den Abstützflächen 28 bzw. geringfügig darunterliegend nach außen erstrecken können. Insbesondere kann in der abgesenkten Ausgangsstellung die Schutzbarriere 22 vollständig unter dem von den Seitenteilen 31 und den daran befestigten Heuwerbungsaggregaten 5 überstrichenen Verschwenkweg liegen, so dass die Heuwerbungsaggregate 5 ohne Kollision mit den Schutzbarrieren 22 nach vorne an den Fahrrahmen 2 angeklappt und an die Abstützflächen 28 gefahren werden können. Durch das genannte Absenken der Seitenteile 31 in der vorne angeklappten Stellung, werden dann die nicht beanspruchten mechanischen Betätiger 27 niedergedrückt, wodurch die Lagerschenkel 33 und damit der gesamte Schutzbügel 29 der Schutzbarrieren 22 jeweils nach oben geschwenkt werden, wobei hier vorteilhafterweise die genannten Lagerschenkel 33 in eine von den Schwenkachsen 24 schräg nach oben außen verlaufende Stellung, vorzugsweise unter einem Neigungswinkel zur Horizontalen von etwa 30° bis 60°, insbesondere etwa 30° bis 45°, gebracht werden können, wie dies Fig. 6 zeigt. Vorteilhafterweise wird der Schwenkvorgang derart bemessen, dass sich die Schutzbarrieren 22 mit ihren Barriereschenkeln 30 in Höhe der Rechkreisel 5 rechts und links außerhalb der Rechkreiselzinken erstrecken, um ein Hineinlaufen in die Rechzinken zu verhindern, vgl. Fig. 6.

## Patentansprüche

1. Heuwerbungsmaschine, vorzugsweise vielkreiseliger Zetter, mit
einem an einen Schlepper anbaubaren Fahrrahmen (2), der über ein Fahrwerk (4) am Boden abgestützt ist, sowie
einer Mehrzahl von Heuwerbungsaggregaten (5), die an einem Tragrahmen (7) gelagert sind, der relativ zum Fahrrahmen (2) zusammen mit den Heuwerbungsaggregaten (5) von einer Hubschwenkvorrichtung (19) aus einer Arbeitsstellung in eine Transportstellung aushebbar ist, wobei
in der Arbeitsstellung die Heuwerbungsaggregate (5) quer zur Fahrtrichtung versetzt angeordnet sind und in der Transportstellung entlang des Fahrrahmens (2) hintereinander angeordnet sind, wobei
an dem Fahrrahmen (2) eine Schutzbarriere (22) beweglich gelagert ist, die zwischen einer Schutzstellung, in der die Schutzbarriere (22) quer zur Fahrtrichtung (23) betrachtet vor den in Transportstellung befindlichen Heuwerbungsaggregaten (5) angeordnet ist, und einer Inaktivstellung, in der die in Transportstellung befindlichen Heuwerbungsaggregate (5) quer zur Fahrtrichtung (23) freiliegen, bewegbar ist,
**dadurch gekennzeichnet, dass**
die Schutzbarriere (22) einen Schutzbügel (29) mit einem längsträgerartig ausgebildeten Barriereschenkel (30) umfasst und an dem Fahrrahmen (2) anhebbar und absenkbar gelagert ist derart, dass die Schutzbarriere (22) unter die in Transportstellung befindlichen Heuwerbungsaggregate absenkbar und in einen von den Heuwerbungsaggregaten in Transportstellung eingenommenen Höhenbereich anhebbar ist, und
Stellmittel (26) zum automatischen Verstellen der Schutzbarriere (22) in Abhängigkeit einer Stellung der Heuwerbungsaggregate (5) vorgesehen sind, so dass die Schutzbarriere (22) automatisch in die Schutzstellung bewegt wird, wenn die Heuwerbungsaggregate (5) ihre Transportstellung erreicht haben, wobei
die Stellmittel eine sensorische Erfassung der Stellung der Heuwerbungsaggregate (5) vorsehen und einen fremdenergiebetriebenen Stellaktor aufweisen, der entsprechend der sensorischen Erfassung der Stellung der Heuwerbungsaggregate (5) betätigt wird.

2. Heuwerbungsmaschine nach dem vorhergehenden Anspruch, wobei die Schutzbarriere (22) um zumindest eine liegende, etwa in Fahrtrichtung (23) weisende Schwenkachse (24) schwenkbar am Fahrrahmen (2) gelagert ist, wobei die genannte Schwenkachse (24) vorzugsweise quer von einer Längsmittelebene (25) beabstandet und/oder unter den in Transportstellung befindlichen Heuwerbungsaggregaten angeordnet ist.

3. Heuwerbungsmaschine nach einem der vorhergehenden Ansprüche, wobei sich der Barriereschenkel (30) im Wesentlichen parallel zum Fahrrahmen (2) erstreckt und sich in der Schutzstellung vor den in Transportstellung befindlichen Heuwerbungsaggregaten (5) erstreckt.

4. Heuwerbungsmaschine nach einem der vorhergehenden Ansprüche, wobei verschiedene Heuwerbungsaggregate (5) in der Transportstellung sich auf unterschiedlichen Seiten des Fahrrahmens (2) entlang des genannten Fahrrahmens (2) erstrecken und ein Paar auf gegenüberliegenden Seiten des Fahrrahmens (2) angeordnete Schutzbarrieren (22) vorgesehen sind.

5. Heuwerbungsmaschine nach einem der vorhergehenden Ansprüche, wobei der Tragrahmen (7) um zumindest eine liegende Querachse (12; 13) schwenkbar an dem Fahrrahmen (2) angelenkt ist und wobei der Tragrahmen (7) abklappbaren Seitenteile umfasst, die an einem Mittelteil (10) des Tragrahmens (7) schwenkbar angelenkt sind derart, dass die genannten Seitenteile in der abgesenkten Arbeitsstellung um liegende, in Fahrtrichtung weisende Achsen scharnieren und in der ausgehobenen Transportstellung zusammen mit den an den Seitenteilen gelagerten Heuwerbungsaggregaten (5) nach vorne an den Fahrrahmen (2) anklappbar sind.

6. Heuwerbungsmaschine nach dem vorhergehenden Anspruch, wobei die Schutzbarriere (22) durch Absenken der nach vorne an den Fahrrahmen (2) angeklappten Seitenteile des Tragrahmens (7) betätigbar und in ihre Schutzstellung verbringbar ist.

## Claims

1. A hay-making machine, preferably a multi-rotor tedder, having
a chassis frame (2) which is supported on the ground via a chassis (4) and
having a plurality of hay-making units (5) which are supported at a support frame (7) which can be raised by a lifting pivoting apparatus (19) from a working position into a transport position relative to the chassis frame (2) together with the hay-making units (5), wherein
the hay-making units (5) are arranged offset transversely to the direction of travel in the working position and are arranged behind one another in the transport position along the chassis frame (2), wherein
a protective barrier (22) is movably supported at the chassis frame (2) and is movable between a protective position in which the protective barrier (22) is arranged in front of hay-making units (5) located in the transport position viewed transversely to the direction of travel (23) and an inactive position in which the hay-making units (5) located in the transport position are exposed transversely to the direction of travel (23),
**characterised in that**
the protective barrier (22) comprises a protective hoop (29) having a barrier limb (30) which is formed in the manner of a longitudinal member, the protective hoop being able to be raised and lowered at the chassis frame (2) such that the protective barrier (22) can be lowered beneath the hay-making units located in the transport position and can be raised into a vertical region adopted by the hay-making units in the transport position, and
adjustment means (26) for the automatic adjustment of the protective barrier (22) in dependence on a position of the hay-making units (5) are provided so that the protective barrier (22) is automatically moved into the protective position when the hay-making units (5) have reached their transport position, wherein
the adjustment means provide for a detection of the position of the hay-making units (5) by sensor and have an adjustment actuator actuated by external energy and which is actuated in accordance with the detection by sensor of the position of the hay-making units (5).

2. A hay-making machine in accordance with the preceding claim, wherein the protective barrier (22) is pivotably supported at the chassis frame (2) about at least one horizontal pivot axis (24) facing in the direction of travel (23), wherein the named pivot axis (24) is preferably arranged spaced apart transversely from a central longitudinal plane (25) and/or beneath the hay-making units located in the transport position.

3. A hay-making machine in accordance with one of the preceding claims, wherein the barrier limb (30) extends substantially parallel to the chassis frame (2) and, in the protective position, extends before the hay-making units (5) located in the transport position.

4. A hay-making machine in accordance with one of the preceding claims, wherein different hay-making units (5) extend in the transport position on different sides of the chassis frame (2) along the named chassis frame (2) and a pair of protective barriers (22) arranged on oppositely disposed sides of the chassis frame (2) are provided.

5. A hay-making machine in accordance with one of the preceding claims, wherein the support frame (7) is pivotally connected to the chassis frame (2) pivotable about at least one horizontal transverse axis (12; 13), and wherein the support frame (7) comprises side parts which can be folded down and which are pivotably connected to a middle part (10) of the support frame (7) such that the named side parts are hinged about horizontal axes facing in the direction of travel in the lowered working position and can be folded forwards to the chassis frame (2) together with the hay-making units (5) supported at the side parts in the raised transport position.

6. A hay-making machine in accordance with the preceding claim, wherein the protective barrier (22) can be actuated by lowering the side parts of the support frame (7) folded forwards to the chassis frame (2) and can be brought into their protective position.

## Revendications

1. Machine de fenaison, de préférence épandeur-faneur à toupies multiples, comprenant
un châssis (2) pouvant être monté sur un tracteur, qui est supporté sur le sol par le biais d'un mécanisme de déplacement (4), ainsi
qu'une pluralité de groupes de fenaison (5) qui sont montés sur un cadre porteur (7) qui peut être relevé par rapport au châssis (2) d'une position de travail à une position de transport conjointement avec les groupes de fenaison (5) par un dispositif de levage et de pivotement (19),
les groupes de fenaison (5) étant disposés, dans la position de travail, décalés transversalement au sens de la marche et, dans la position de transport, disposés les uns derrière les autres le long du châssis (2),
une barrière de protection (22) étant montée mobile sur le châssis (2), la barrière de protection étant mobile entre une position de protection, dans laquelle la barrière de protection (22), vue transversalement au sens de la marche (23), est disposée devant les groupes de fenaison (5) se trouvant dans la position de transport, et une position inactive, dans laquelle les groupes de fenaison (5) se trouvant dans la position de transport sont exposés librement transversalement au sens de la marche (23),
**caractérisée en ce que**
la barrière de protection (22) comprend un arceau de protection (29) avec un côté de barrière (30) réalisé à la manière d'un longeron et est montée sur le châssis (2) de manière à pouvoir être levée et descendue de telle manière que la barrière de protection (22) peut être descendue sous les groupes de fenaison se trouvant en position de transport et peut être levée dans une plage de hauteur occupée par les groupes de fenaison en position de transport, et
des moyens de réglage (26) sont prévus pour le réglage automatique de la barrière de protection (22) en fonction d'une position des groupes de fenaison (5), de sorte que la barrière de protection (22) est automatiquement déplacée dans la position de protection quand les groupes de fenaison (5) ont atteint leur position de transport,
les moyens de réglage prévoyant une détection sensorielle de la position des groupes de fenaison (5) et comportant un actionneur de réglage alimenté par une source d'énergie externe, qui est actionné en fonction de la détection sensorielle de la position des groupes de fenaison (5).

2. Machine de fenaison selon la revendication précédente, dans laquelle la barrière de protection (22) est montée sur le châssis (2) pivotante autour d'au moins un axe de pivotement (24) horizontal orienté approximativement dans le sens de la marche (23), dans laquelle ledit axe de pivotement (24) est disposé de préférence espacé transversalement à un plan médian longitudinal (25) et/ou est disposé sous les groupes de fenaison se trouvant en position de transport.

3. Machine de fenaison selon l'une des revendications précédentes, dans laquelle le côté de barrière (30) s'étend essentiellement parallèlement au châssis (2) et s'étend dans la position de protection devant les groupes de fenaison (5) se trouvant en position de transport.

4. Machine de fenaison selon l'une des revendications précédentes, dans laquelle, dans la position de transport, différents groupes de fenaison (5) s'étendent le long dudit châssis (2) sur différents côtés du châssis (2) et une paire de barrières de protection (22) se trouve disposée sur des côtés opposés du châssis (2).

5. Machine de fenaison selon l'une des revendications précédentes, dans laquelle le cadre porteur (7) est articulé sur le châssis (2) pivotant autour d'au moins un axe transversal horizontal (12 ; 13) et dans laquelle le cadre porteur (7) comprend des parties latérales rabattables qui sont articulées pivotantes sur une partie centrale (10) du cadre porteur (7) de telle manière que lesdites parties latérales s'articulent dans la position de travail abaissée autour d'axes horizontaux orientés dans le sens de la marche et sont rabattables vers l'avant sur le châssis (2) dans la position de transport levée conjointement avec les groupes de fenaison (5) montés sur les parties latérales.

6. Machine de fenaison selon la revendication précédente, dans laquelle la barrière de protection (22) peut être actionnée et mise dans sa position de protection en descendant les parties latérales du cadre porteur (7) rabattues vers l'avant sur le châssis (2).
